# EUROPÄISCHE PATENTANMELDUNG

(11) **EP 3 663 069 A1**
(43) Veröffentlichungstag der Anmeldung: **10.06.2020**
(21) Anmeldenummer: 19211514.5
(22) Anmeldetag: 26.11.2019
(51) Int. Cl.: B29C 48/38, B29C 48/455, B29C 48/425, B29C 48/27, B29C 48/68, B29C 48/40, B29C 48/25

(54) **EXTRUSIONSVORRICHTUNG**

(30) Priorität: 29.11.2018 DE 102018130245
(71) Anmelder: HB-Feinmechanik GmbH & Co.KG, 94526 Metten (DE)
(72) Erfinder: Endraß, Bonifaz, 94239 Gotteszell (DE)
(74) Vertreter: Wunderlich & Heim Patentanwälte Partnerschaftsgesellschaft mbB

(57) **Zusammenfassung**

Die Erfindung betrifft eine Extrusionsvorrichtung mit einem Extrudergehäuse, mindestens einer Extruderschnecke, welche in dem Gehäuse angeordnet ist, einem Eingang zum Zuführen einer zu verarbeitenden Masse durch die mindestens eine Extruderschnecke in das Gehäuse, einem Ausgang zum Austritt der extrudierten Masse aus dem Gehäuse und einer Antriebseinrichtung zum drehenden Antreiben der mindestens einen Extruderschnecke. Gemäß der Erfindung ist vorgesehen, dass mehrere Extruderschnecken parallel und beabstandet zueinander in dem Extrudergehäuse angeordnet sind, wobei zwischen zwei aufeinander folgenden Extruderschnecken jeweils ein Übergabekanal ausgebildet ist. Eine erste Extruderschnecke ist zum Fördern der Masse in einer ersten Extrusionsrichtung von dem Eingang zu dem Übergabekanal ausgebildet und eine nachfolgende Extruderschnecke ist zum Fördern der Masse von dem Übergabekanal in einer zweiten Extrusionsrichtung ausgebildet, welche der ersten Extrusionsrichtung entgegengesetzt ist.

## Beschreibung

Die Erfindung betrifft eine Extrusionsvorrichtung mit einem Extrudergehäuse, mindestens einer Extruderschnecke, welche in dem Extrudergehäuse angeordnet ist, einem Eingang zum Zuführen einer zu verarbeitenden Masse durch die mindestens eine Extruderschnecke in das Gehäuse, einem Ausgang zum Austritt der extrudierten Masse aus dem Gehäuse und einer Antriebseinrichtung zum drehenden Antreiben der mindestens einen Extruderschnecke, gemäß dem Oberbegriff des Anspruchs 1.

Derartige Extrusionsvorrichtungen werden etwa in der chemischen oder pharmazeutischen Verfahrenstechnik eingesetzt, wobei eine zu verarbeitende Masse im Verlauf des Extruders etwa durch Mischen, Zuführen weiterer Stoffe, Entgasen, Kneten, Komprimieren etc. in einer definierten Weise bearbeitet und anschließend ausextrudiert wird. Für bestimmte Produkte sind längere Ver- oder Bearbeitungszeiten notwendig.

Produktbedingte längere Verfahrenszeiten bedeuten bei einer Extrusionsvorrichtung entsprechend lange Extruderschnecken und entsprechend ausgebildete Extrudergehäuse. Mit Zunahme der Länge der Extruderschnecken ergeben sich entsprechende Probleme hinsichtlich der ausreichenden Steifigkeit der Schnecke, der Lagerung der Schnecke sowie von Reibungseffekten zwischen den Extruderschnecken, dem Gehäuse und dem Produkt. Je länger eine Extrusionsschnecke, umso höher ist der Konstruktions- und Fertigungsaufwand zum Ausbilden der Extruderschnecke, der Lagerungen sowie der Antriebseinrichtung für die Extruderschnecke. Aufgrund des steigenden Konstruktions- und Fertigungsaufwands sind der Länge der Extrusionsschnecken und der Verweilzeit der Extrudermassen in die Extrusionsvorrichtung bei einem vorgegebenen Mengendurchsatz wirtschaftliche Grenzen gesetzt.

Der Erfindung liegt die **Aufgabe** zugrunde, eine Extrusionsvorrichtung anzugeben, welche bei einem einfachen Aufbau auch längere Verfahrensdauern der Masse im Extruder ermöglicht.

Die Aufgabe wird nach der Erfindung durch eine Extrusionsvorrichtung mit den Merkmalen des Anspruchs 1 gelöst. Bevorzugte Ausführungsformen der Erfindung sind in den abhängigen Ansprüchen angegeben.

Die erfindungsgemäße Extrusionsvorrichtung ist dadurch gekennzeichnet, dass mehrere Extruderschnecken parallel und beanstandet zueinander in dem Extrudergehäuse angeordnet sind, wobei zwischen zwei aufeinanderfolgenden Extruderschnecken jeweils ein Übergabekanal ausgebildet ist, dass eine erste Extruderschnecke zum Fördern der Masse in einer ersten Extrusionsrichtung von dem Eingang zu dem Übergabekanal ausgebildet ist und dass eine nachfolgende Extruderschnecke zum Fördern der Masse von dem Übergabekanal in einer zweiten Extrusionsrichtung ausgebildet ist, welche der ersten Extrusionsrichtung entgegengesetzt ist.

Eine Grundidee der Erfindung kann darin gesehen werden, statt einer langen Extruderschnecke mehrere kürzere Extruderschnecken vorzusehen, welche in dem Extrudergehäuse kaskadenartig oder mäanderförmig angeordnet sind. Dabei sind die einzelnen Extruderschnecken über einen Übergabekanal miteinander verbunden. Durch den Übergabekanal wird die Extrusionsmasse am Ende einer ersten Extrusionsschnecke mit dem Anfang einer vorzugsweise darunterliegenden zweiten Extrusionsschnecke übergeben. Hinsichtlich Ihrer Extrusions- oder Förderrichtung sind die Extruderschnecken parallel und entgegengerichtet ausgebildet.

Gemäß der Findung können so durch eine nahezu beliebige Anzahl von Extruderschnecken auch relativ lange gewünschte Verfahrensstrecken und damit Verfahrensdauern für eine Extrusionsmasse erreicht werden. Durch die kaskadenartige Anordnung der Extruderschnecken in dem Gehäuse kann ein insgesamt kompaktes Gehäuse mit einer relativ geringen Aufstellfläche erzielt werden.

Durch die Verwendung mehrerer kurzer Extruderschnecken können diese mit geringerer Steifigkeit oder Festigkeit und damit aus einem günstigeren Material hergestellt werden. Auch der Aufwand für die Lagerung und den Antrieb der Extruderschnecke reduziert sich merklich.

Besonders vorteilhaft ist es nach einer Weiterbildung der Erfindung, dass drei oder mehr Extruderschnecken in einer ungeraden Anzahl in dem Extrudergehäuse angeordnet sind und dass zwei aufeinanderfolgende Extruderschnecken, welche mit einem Übergabekanal verbunden sind, jeweils eine entgegengesetzte Extrusionsrichtung aufweisen. Bei einer derartigen kaskadenartigen Anordnung einer ungeraden Zahl von zueinander versetzten Extruderschnecken können wie bei einem herkömmlichen Extruder ein Eingang für die Masse an einem Ende des Extrudergehäuses und ein Ausgang an dem gegenüberliegenden Ende des Extrudergehäuses vorgesehen werden. Auf diese Weise können bestehende Extrusionsvorrichtungen in vorhandenen Anlagen ohne weiteres durch die erfindungsgemäße Extrusionsvorrichtung mit einer erhöhten Verfahrensdauer ersetzt werden.

Gemäß einer bevorzugten Ausführungsvariante der Erfindung ist vorgesehen, dass die Extruderschnecken eine Länge aufweisen, welche kürzer ist als 3 m, insbesondere zwischen 1,5 m bis 2,5 m beträgt. In diesem Längenbereich ist eine besonders effiziente Fertigung der Extruderschnecken und der Extrusionsvorrichtung insgesamt möglich.

Grundsätzlich kann die Extrusionsvorrichtung als ein prinzipieller Einwellenextruder ausgebildet sein, wobei in jedem Segment der Extrusionsvorrichtung vor und nach einem Übergabekanal lediglich eine einwellige Extruderschnecke vorgesehen ist. Für die Verfahrenstechnik ist es nach einer Weiterbildung der Erfindung besonders zweckmäßig, dass die Extruderschnecken jeweils als Doppelwellen-Extruderschnecken ausgebildet sind, welche insbesondere gegenläufig drehend antreibbar sind. Bei Doppelwellen- oder Mehrwellen-Extruderschneckenanordnungen sind entsprechend zwei oder mehr Extruderschnecken so parallel angeordnet und ausgebildet, dass die Wendelbereiche miteinander kämmen. In dem kämmenden Bereich können besondere Kneteffekte zur Verarbeitung der Extrusionsmasse in der Extrusionsvorrichtung erzielt werden. Diese sind bei einem gegenläufigen Antreiben der zwei miteinander kämmenden Extruderschnecken besonders vorteilhaft. Es ist jedoch auch ein gleichlaufender Antrieb der miteinander kämmenden Doppelwellen-Extruderschnecken möglich.

Eine weitere bevorzugte Ausführungsform der erfindungsgemäßen Extrusionsvorrichtung besteht darin, dass die Antriebseinrichtung zum Antreiben der Extruderschnecken an einer Stirnseite des Extrudergehäuses lösbar und zwischen einer Betriebsposition an dem Extrudergehäuse und einer Wartungsposition verschiebbar gelagert ist, in welcher die Antriebseinrichtung von dem Extrudergehäuse beanstandet ist. Bei dieser Anordnung werden alle Extruderschnecken unabhängig von der jeweiligen Extrusionsrichtung an einer Seite des Extrudergehäuses mit einer Antriebseinrichtung drehend angetrieben. Die Antriebseinrichtung kann dabei einen oder mehrere Motore und eine entsprechend zugeordnete Getriebeeinrichtung aufweisen. Die Getriebeeinrichtung weist dabei eine Anzahl von Abtriebswellen auf, welche der Anzahl der Extruderschnecken in dem Extrudergehäuse entspricht. Die Extruderschnecken und die Abtriebswellen sind dabei über entsprechend lösbare Kupplungseinrichtungen zur Übertragung des Drehmoments verbunden. Die Kupplungseinrichtung kann dabei eine Welle-Nabe-Verbindung, etwa eine Hülse mit einem Keilnutprofil sein.

Das Verschieben der Antriebseinrichtung von der Betriebsposition in die Wartungsposition kann von Hand oder über einen Verschiebeantrieb, etwa einem hydraulischen Stellzylinder, erfolgen. Die Antriebseinrichtung kann dabei vorzugsweise verschiebbar auf Schienen gelagert sein. Durch diese Verschiebbarkeit können Wartungsarbeiten vereinfacht und damit beschleunigt werden.

Eine weitere vorteilhafte Ausführungsvariante der Erfindung kann darin gesehen werden, dass eine Reinigungseinrichtung vorgesehen ist, welche zum automatischen Reinigen der Extruderschnecken beim Verschieben der Antriebseinrichtung zusammen mit den daran angebrachten Extruderschnecken ausgebildet ist. Vorzugsweise kann die Antriebseinrichtung dabei soweit gegenüber dem Extrudergehäuse verschoben werden, dass die Extruderschnecken teilweise oder insgesamt freiliegen. Die Frontplatte der Antriebseinrichtung ist dabei mit einer entsprechenden Dichtung versehen, so dass die Aufnahmeräume für die Extruderschnecken in dem Extrudergehäuse beim Verfahren der Antriebseinrichtung in die Wartungsposition freigegeben werden. Bei einem solchen Freilegen der Extruderschnecken können diese etwa bei einem Produktwechsel mittels einer Reinigungseinrichtung automatisch gereinigt werden. Diese Reinigungseinrichtung kann insbesondere Düsen zum Aufsprühen eines Reinigungsfluides, etwa Druckluft oder Wasser, auf die Extruderschnecken sein. Anheftende Produktmassen an den Extruderschnecken können so gelöst werden. Das gelöste Produktmaterial kann von einer Abführeinrichtung am Bodenbereich aufgefangen und abgeführt werden.

Besonders vorteilhaft ist es nach einer Weiterbildung der Erfindung, dass die Reinigungseinrichtung zum Reinigen der Extruderschnecken mittels CO₂-Eiskristallen ausgebildet ist. Die Reinigungseinrichtung weist dabei ein entsprechendes Depot an verflüssigtem Kohlendioxid auf. Durch eine entsprechende Einstellung von Düsen und Drosseln kann das CO₂ beim Austritt aus einer Düse unter Atmosphärenbedingungen auskristallisieren. Mittels eines entsprechenden Druckluftstromes können die so gebildeten Eiskristalle für ein effizientes Reinigen der Extruderschnecken auf diese aufgesprüht werden. Unmittelbar nach dem Reinigungsschritt vergasen die CO₂-Eiskristalle unter Atmosphärenbedingungen, so dass das abgereinigte Produkt nicht mit einem Reinigungsmittel verunreinigt ist. Die abgereinigte Extrusionsmasse kann somit auch wieder in den Produktionsablauf rückgeführt werden.

Eine besonders kostengünstige Ausgestaltung der Extrusionsvorrichtung ergibt sich nach einer Ausführungsvariante der Erfindung dadurch, dass die Extruderschnecken jeweils an einem oder beiden Endbereichen in dem Extrudergehäuse drehbar gelagert sind und dass ein Außenumfang der Extruderschnecken außerhalb der gelagerten Endbereiche mit einem Abstand zu einer Innenseite der Schneckenaufnahmeräume in dem Extrudergehäuse angeordnet ist. Vorzugsweise können zwischen dem Außenumfang der Extruderschnecken und der Innenseite der zugehörigen Schneckenaufnahmeräume in dem Extrudergehäuse ein Abstand zwischen 0,2 bis 3 mm vorgesehen sein. Aufgrund der möglichen kurzen Länge der Extruderschnecken weisen diese kaum eine Durchbiegung auf, selbst wenn diese nur an einem oder beiden Endbereichen der Extruderschnecke drehbar gelagert und damit gegenüber dem Extrudergehäuse abgestützt sind. Bei dieser erfindungsgemäßen Anordnung wird ein Reibungskontakt zwischen Extruderschnecken und dem Extrudergehäuse vermieden, so dass auf sonst übliche Gleitmaterialien, wie Bronze oder Messing oder gehärteten Stahl verzichtet werden kann. Vielmehr können die Extruderschnecken und auch das Extrudergehäuse aus einfachen Stahlmaterialien hergestellt sein. Dies bringt eine erhebliche Kostenersparnis mit sich.

Besonders vorteilhaft ist es dabei, dass das Gehäuse aus ungehärtetem Stahl ausgebildet ist. Dies verbessert auch die Verarbeitbarkeit, so dass weitere Kosteneinsparungen erzielt werden können.

Weiterhin ist es für einen besonders kompakten Aufbau der Extrusionsvorrichtung nach der Erfindung vorteilhaft, dass das Gehäuse als ein Gehäuseblock ausgeführt ist, welcher einteilig oder modular ausgebildet ist. Aufgrund der Verwendung ungehärteter, einfacher Stahlmaterialien, kann das Gehäuse einteilig als ein Gehäuseblock ausgeführt werden. Dies erspart zusätzlichen Aufwand bei Reinigung und Abdichtung gegenüber herkömmlichen mehrteiligen Gehäusen. Nach einer erfindungsgemäßen Ausführung kann das Gehäuse jedoch auch als ein mehrteiliger, modular aufgebauter Gehäuseblock ausgebildet sein. Dabei sind die einzelnen Gehäuseelemente ebenfalls in einfacher Weise und vorzugsweise als gleiche Module ausgebildet. Der Gehäuse kann insbesondere aus rostbeständigen Stahllegierungen oder sogar aus Kunststoff bestehen.

Die Erfindung ist vielfältig einsetzbar, so in der chemischen und der pharmazeutischen Industrie, in der Lebensmittel verarbeitenden Industrie und vielen weiteren Bereichen.

Die Erfindung wird nachfolgend anhand eines bevorzugten Ausführungsbeispieles weiter beschrieben, welches in den beigefügten Zeichnungsfiguren schematisch dargestellt ist. In den Zeichnungen zeigen:
- Fig. 1: eine Querschnittsansicht durch eine erfindungsgemäße Extrusionsvorrichtung von der Seite und
- Fig. 2: eine Querschnittsansicht der erfindungsgemäßen Extrusionsvorrichtung von Fig. 1 von oben.

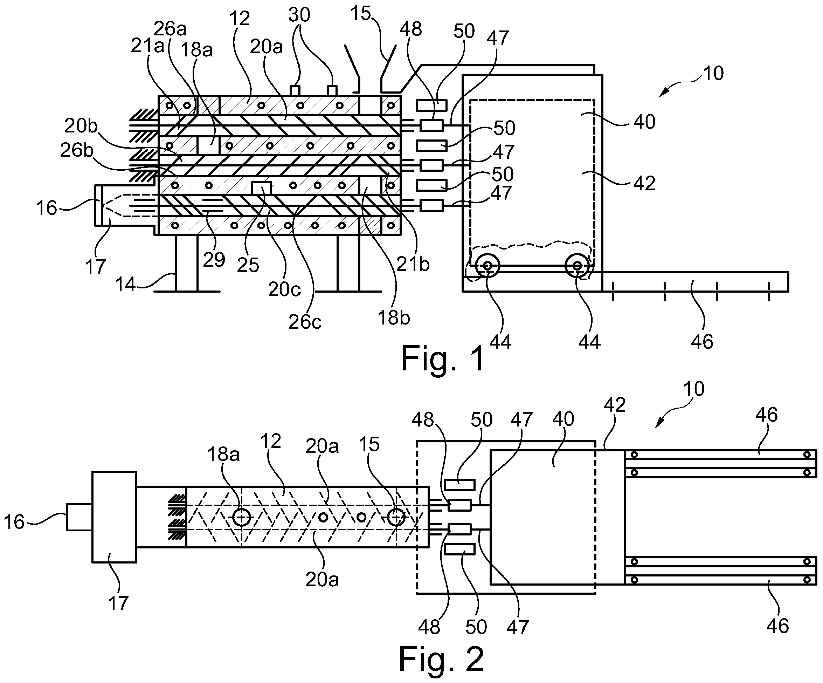

In den Figuren 1 und 2 ist eine erfindungsgemäße Extrusionsvorrichtung 10 mit einem blockartigen, einstückigen Extrudergehäuse 12 dargestellt. In dem Extrudergehäuse 12 sind drei übereinanderliegende Schneckenaufnahmeräume 26a, 26b, 26c beabstandet und parallel zueinander angeordnet. In den jeweiligen Schneckenaufnahmeräumen 26a, 26b, 26c sind Extruderschnecken 20a, 20b, 20c in einer Doppelwellenanordnung eingebracht, wie insbesondere Fig. 2 zu entnehmen ist.

Der obere erste Schneckenaufnahmeraum 26a ist mit dem darunterliegenden zweiten Schneckenaufnahmeraum 26b über einen vertikal gerichteten ersten Übergabekanal 18a verbunden. Der mittlere zweite Schneckenaufnahmeraum 26b ist mit dem unteren dritten Schneckenaufnahmeraum 26c über einen zweiten Übergabekanal 18b verbunden.

Eine zu extrudierende Masse wird über einen trichterförmigen Eingang 15 an der Oberseite des Extrudergehäuses 12 in einen hinteren Bereich des ersten Schneckenaufnahmeraumes 26a mit den beiden ersten Extruderschnecken 20a eingeleitet. Die rotierend angetriebenen ersten Extruderschnecken 20a fördern die zu extrudierende Masse in einer ersten Extrusionsrichtung von dem Eingang 15 zu dem ersten Übergabekanal 18a. Im Verlauf dieser ersten Extrusion können über weitere Zuführeinrichtungen 30 abhängig von der Extrusionsaufgabe weitere Stoffe im Verfahrensablauf zugeführt werden. Es ist jedoch auch eine Entgasung oder Ähnliches möglich.

Aus dem im Wesentlichen horizontal verlaufenden ersten Schneckenaufnahmeraum 26a tritt am Ende dieser ersten Extrusion die extrudierende Masse über den vertikal gerichteten Übergabekanal 18a nach unten in den darunterliegenden zweiten Schneckenaufnahmeraum 26b mit den zweiten Extruderschnecken 20b ein. Zwischen dem Ende der Extruderschnecke 20a und dem Übergabekanal 18a ist ein Schneckenabschnitt 21a mit entgegengesetzter Förderrichtung angeordnet, so dass zu beiden Seiten des Übergabekanals 18a in diesen Material gefördert wird. Die beiden zweiten Extruderschnecken 20b sind so ausgebildet und angetrieben, dass diese die zu extrudierende Masse in einer zweiten Extrusionsrichtung von dem ersten Übergabekanal 18a am vorderen Endbereich des Extrudergehäuses 12 zu einem zweiten Übergabekanal 18b an einem hinteren Endbereich des Extrudergehäuses 12 fördern. Die zweite Extrusionsrichtung ist dabei entgegengesetzt gerichtet zur ersten Extrusionsrichtung. Anschließend kann die weiter extrudierte und behandelte Masse von dem zweiten Schneckenaufnahmeraum 26b über den zweiten vertikal gerichteten Übergabekanal 18b in den unteren dritten Schneckenaufnahmeraum 26b mit zwei weiteren Extruderschnecken 20c übertreten. Am Ende der jeweiligen Extruderschnecke 20b kann, wie zuvor beschrieben, am zugehörigen Übergabekanal 18b ein Extruderabschnitt 21b mit entgegengesetzter Wendel- und Förderrichtung sein. In dem unteren dritten Schneckenaufnahmeraum 26c wird die Extrusionsmasse durch die dritten Extruderschnecken 26c wieder in der ersten Extrusionsrichtung von dem zweiten Übergabekanal 18b zu einem Ausgang 16 mit einer Extrusionsmaske oder einer Granuliereinheit 17, welche eine Düse mit einer Lochplatte und Schneideinrichtungen aufweisen kann, gefördert. Am dritten Schneckenaufnahmeraum 26c kann ein Vakuumanschluss 25 vorgesehen sein.

Durch die kaskadenartige Anordnung der mehreren Extruderschnecken 20 kann eine relativ lange Verweilzeit und damit eine relativ lange Verfahrensdauer zum Behandeln der Extrusionsmasse in der erfindungsgemäße Extrusionsvorrichtung 10 erreicht werden.

Die Extruderschnecken 20 sind in dem Extrudergehäuse 12 an ihren jeweiligen Endbereichen derart drehbar gelagert, dass die dazwischenliegenden Schneckenbereiche eine Innenseite der jeweiligen Schneckenaufnahmeräume 26 nicht kontaktieren. Vielmehr ist ein ringförmiger Abstand zwischen der Außenseite der Extruderschnecken 20 und der Innenseite der Schneckenaufnahmeräume 26 vorgesehen. Falls nötig, können jedoch auch vorsorglich zusätzliche Lager 29 für die Extruderschnecken 20c vorgesehen sein.

Zum drehenden Antreiben der Extruderschnecken 20 ist an einem hinteren Ende des Extrudergehäuses 12, welches auf einem Gestell 14 fest gelagert und angeordnet ist, eine Antriebseinrichtung 40 mit einem kastenartigen Gehäuse 42 positioniert. Die Antriebseinrichtung 40 weist einen nicht näher dargestellten Antrieb, welcher ein Elektromotor oder ein Hydraulikmotor sein kann, und eine entsprechende Getriebeeinrichtung auf, die nicht näher dargestellt ist. Aus dem Gehäuse 42 treten entsprechend der Anzahl und der Anordnung der Extruderschnecken 20 Abtriebswellen 47 aus, welche über hülsenförmige Kupplungen 48 lösbar mit den hinteren Wellenenden der jeweiligen Extruderschnecken 20 zur Drehmomentübertragung verbunden sind.

In den Figuren 1 und 2 ist die erfindungsgemäße Extrusionsvorrichtung 10 in einer Betriebsposition dargestellt, bei welcher eine Kupplungsverbindung zwischen der Antriebseinrichtung 40 und den Extruderschnecken 20 besteht. Das Gehäuse 42 ist auf Rollen 44 gelagert, welche entlang von Schienen 46 am Boden verfahrbar sind. Auf diese Weise kann mittels eines nicht dargestellten Motors oder von Hand die Antriebseinrichtung 40 aus der dargestellten Betriebsposition entlang den Schienen 46 nach hinten in eine Wartungsposition verfahren werden. Dabei können die Kupplungen 50 von den Extruderschnecken 20 gelöst werden, so dass allein die Antriebseinrichtung 40 in die Wartungsposition verfahren wird.

Optional kann die Kupplungsverbindung mit den Kupplungen 50 bestehen bleiben, so dass beim Verfahren der Antriebseinrichtung 40 die Extruderschnecken 20 aus dem Extrudergehäuse 12 herausgezogen werden. Dies kann für einen Reinigungsvorgang erfolgen, der zumindest bei einem Produktwechsel zu erfolgen hat. Zum Durchführen einer Reinigung der aus dem Extrudergehäuse 12 herausgezogenen Extruderschnecken 20 ist eine Reinigungseinrichtung 50 mit einer Vielzahl von nur schematisch dargestellten Düseneinrichtungen vorgesehen, durch welche ein Reinigungsfluid mit einem vorgegebenen Druck auf die Extruderschnecken 20 aufsprühbar ist. So können Produktreste an den Extruderschnecken 20 gelöst werden. Vorzugsweise wird als ein Reinigungsfluid ein Druckluftstrom mit CO₂-Eiskristallen eingesetzt.

## Patentansprüche

1. Extrusionsvorrichtung mit
- einem Extrudergehäuse (12),
- mindestens einer Extruderschnecke (20), welche in dem Extrudergehäuse (12) angeordnet ist,
- einem Eingang (15) zum Zuführen einer zu verarbeitenden Masse durch die mindestens eine Extruderschnecke (20) in das Extrudergehäuse (12),
- einem Ausgang (16) zum Austritt der extrudierten Masse aus dem Extrudergehäuse (20) und
- einer Antriebseinrichtung (40) zum drehenden Antreiben der mindestens einen Extruderschnecke (20),
**dadurch gekennzeichnet,**
- **dass** mehrere Extruderschnecken (20) parallel und beabstandet zueinander in dem Extrudergehäuse (12) angeordnet sind, wobei zwischen zwei aufeinander folgenden Extruderschnecken (12) jeweils ein Übergabekanal (18) ausgebildet ist,
- **dass** eine erste Extruderschnecke (20a) zum Fördern der Masse in einer ersten Extrusionsrichtung von dem Eingang (15) zu dem Übergabekanal (18a) ausgebildet ist und
- **dass** eine nachfolgende Extruderschnecke (20b) zum Fördern der Masse von dem Übergabekanal (18a) in einer zweiten Extrusionsrichtung ausgebildet ist, welche der ersten Extrusionsrichtung entgegengesetzt ist.

2. Extrusionsvorrichtung nach Anspruch 1,
**dadurch gekennzeichnet,**
**dass** drei oder mehr Extruderschnecken (20) in einer ungeraden Anzahl in dem Extrudergehäuse (12) angeordnet sind und
**dass** zwei aufeinander folgende Extruderschnecken (20), welche mit einem Übergabekanal (18) verbunden sind, jeweils eine entgegengesetzte Extrusionsrichtung aufweisen.

3. Extrusionsvorrichtung nach Anspruch 1 oder 2,
**dadurch gekennzeichnet,**
**dass** die Extruderschnecken (20) eine Länge aufweisen, welche kürzer ist als 3 m, insbesondere zwischen 1,5 m bis 2,5 m beträgt.

4. Extrusionsvorrichtung nach einem der Ansprüche 1 bis 3,
**dadurch gekennzeichnet,**
**dass** die Extruderschnecken (20) jeweils als Doppelwellen-Extruderschnecken ausgebildet sind, welche insbesondere gegenläufig drehend antreibbar sind.

5. Extrusionsvorrichtung nach einem der Ansprüche 1 bis 4,
**dadurch gekennzeichnet,**
**dass** die Antriebseinrichtung (40) zum Antreiben der Extruderschnecken (20) an einer Stirnseite des Extrudergehäuses (12) lösbar und zwischen einer Betriebsposition an dem Extrudergehäuse (12) und einer Wartungsposition verschiebbar gelagert ist, in welcher die Antriebseinrichtung (40) von dem Extrudergehäuse (12) beabstandet ist.

6. Extrusionsvorrichtung nach Anspruch 5,
**dadurch gekennzeichnet,**
**dass** eine Reinigungseinrichtung (50) vorgesehen ist, welche zum automatischen Reinigen der Extruderschnecken (20) beim Verschieben der Antriebseinrichtung (40) zusammen mit den daran angebrachten Extruderschnecken (20) ausgebildet ist.

7. Extrusionsvorrichtung nach Anspruch 6,
**dadurch gekennzeichnet,**
**dass** die Reinigungseinrichtung (50) zum Reinigen der Extruderschnecken (20) mittels CO₂-Eiskristallen ausgebildet ist.

8. Extrusionsvorrichtung nach einem der Ansprüche 1 bis 7,
**dadurch gekennzeichnet,**
**dass** die Extruderschnecken (20) jeweils an einem oder beiden Endbereichen in dem Extrudergehäuse (12) drehbar gelagert sind und
**dass** ein Außenumfang der Extruderschnecken (20) außerhalb der gelagerten Endbereiche mit einem Abstand zu einer Innenseite der Schneckenaufnahmeräume (26) in dem Extrudergehäuse (12) angeordnet ist.

9. Extrusionsvorrichtung nach einem der Ansprüche 1 bis 8,
**dadurch gekennzeichnet,**
**dass** das Extrudergehäuse (12) aus ungehärtetem Stahl ausgebildet ist.

10. Extrusionsvorrichtung nach einem der Ansprüche 1 bis 9,
**dadurch gekennzeichnet,**
**dass** das Extrudergehäuse (12) als ein Gehäuseblock ausgeführt ist, welcher einteilig oder modular ausgebildet ist.
